# EUROPEAN PATENT SPECIFICATION

(11) **EP 3 676 462 B1**
(45) Date of publication and mention of the grant of the patent: **07.06.2023**
(21) Application number: 18766019.6
(22) Date of filing: 31.08.2018
(51) Int. Cl.: E04C 2/296, E04C 2/38, E04B 2/74, E04B 2/70, E04B 1/14, E04B 1/80, E04C 2/284

(54) **MULTIFUNCTIONAL CONSTRUCTION PANEL**
MULTIFUNKTIONALE BAUPLATTE
PANNEAU DE CONSTRUCTION MULTIFONCTIONNEL

(30) Priority: 01.09.2017 US 201762553154 P
(43) Date of publication of application: 08.07.2020
(73) Proprietor: Innovaré Systems Limited., Coventry, West Midlands CV3 4PW (GB)
(72) Inventor: BLUNT, Peter, Warwick, West Midlands CV34 6BQ (GB); DAWE, Sam, Coventry, West Midlands CV3 6JQ (GB); BANKS, Alex, Barton-under-Needwood, Staffordshire DE13 8HJ (GB)
(74) Representative: J A Kemp LLP
(86) International application number: PCT/GB2018/052477
(87) International publication number: WO 2019/043405

(56) References cited:
- FR-A1- 2 622 617
- FR-A1- 3 006 348
- JP-A- H 094 093
- US-A- 4 463 531
- US-A- 4 471 591
- US-A- 5 297 369

## Description

### BACKGROUND

The disclosure generally relates to load bearing or non-loadbearing construction panels. More particularly, the disclosure relates to a thermally, acoustically and moisture insulated construction panels, that additionally are compliant with fire resistance codes.

Most modern residential and light commercial designs use platform framing, which involves poured in place column-and-slab techniques or skeletonized construction employing a framework of steel girders as a support for precast concrete members.

Furthermore, additional measures for heat insulation and sound insulation are incorporated between internal surface finishes and external weather resistant layers. A Thermal mass capacity of walls is preferable to achieve a balanced room temperature. Structures are required by building regulations to have fire resistance which can either be inherent to the materials used or provided by additional protective layers.

Thermal insulation can be typically added to the exterior walls and roofs of building structures to reduce the rate of heat transfer between the between the interior controlled environment and the external environment.

Insulation can be placed between structural members and also layered inside or outside them before the application of an exterior finish, such as an exterior siding or roofing and internal finishes such as plasterboard.

In typical construction methods, "cold bridges" can form across insulation panels or typical insulation fillers such as mineral wool, between the interior of a structure and the exterior environment, which can form localized areas of increased heat transfer, causing increased HVAC costs and localized material damage, for example from condensation causing corrosion, mold, or rot.

Similarly, acoustic barriers are added between the external and internal walls, as well as various moisture barriers or membranes.

Therefore, the ability to provide selectably adjustable structural elements (in other words, elements which adjustability does not impact the operation and/or functionality of other components in the panel) in construction panels that would allow the optimization of thermal, acoustic, fire and moisture barriers and insulators in a relatively thin construction panel, without forming cold bridges, would be advantageous. FR 3 006 348 A1 discloses an integrated construction panel with the features of the preamble of claim 1.

### SUMMARY

The present invention is defined by the features of claim 1.

Disclosed, in various embodiments, are thermally, acoustically and moisture insulated construction panels, that additionally are compliant with fire resistance regulations without forming cold bridges.

In an embodiment, provided herein is an integrated, multifunctional construction panel comprising: an internal wall section; an internal studs' array operably coupled to the internal wall section, extending externally; a moisture control layer coupled to the internal wall section; an internal thermal insulation layer, an external thermal insulation layer; an external wall section; and an external studs' array operably coupled to the external wall section, extending internally, wherein, the internal studs' array is staggered with respect to the external studs' array.

These and other objectives and advantages of the present technology will become understood by the reader and it is intended that these objects and advantages are within the scope of the technology disclosed and claimed herein. To the accomplishment of the above and related objects, this disclosure may be embodied in the form illustrated in the accompanying drawings, attention being called to the fact, however, that the drawings are illustrative only, and that changes may be made in the specific construction illustrated and described within the scope of the disclosure.

### BRIEF DESCRIPTION OF THE FIGURES

For a better understanding of the thermally, acoustically and moisture insulated construction panels, that additionally are compliant with fire resistance codes without forming cold bridges, reference is made to the accompanying drawings, in which like numerals designate corresponding elements or sections throughout and in which:
FIG. 1, is a schematic of a X-Y cross section of an embodiment of the construction panel;
FIG. 2 is a schematic isometric cutaway view of an embodiment of the construction panel; and
FIG. 3A, illustrates a X-Y Cross section plan view of an embodiment of the construction panel, while FIG. 3B illustrating a modification to increase structural performance of the embodiment illustrated in FIG. 3A, while FIG. 3C illustrating a modification adapted to allow for increased thermal (and acoustic) performance and FIG. 3D, illustrating an even greater thermal (and acoustic) performance.

### DESCRIPTION

Provided herein are embodiments of thermally, acoustically and moisture insulated construction panels, that additionally are compliant with fire resistance codes without forming cold bridges and methods for their use.

A more complete understanding of the components, methods, and devices disclosed herein can be obtained by reference to the accompanying drawings. These figures (also referred to herein as "FIG.") are merely schematic representations based on convenience and the ease of demonstrating the present disclosure, and are, therefore, not intended to indicate relative size and dimensions of the devices or components thereof, their relative size relationship and/or to define or limit the scope of the exemplary embodiments. Although specific terms are used in the following description for the sake of clarity, these terms are intended to refer only to the particular structure of the embodiments selected for illustration in the drawings, and are not intended to define or limit the scope of the disclosure. In the drawings and the following description below, it is to be understood that like numeric designations refer to components of like function.

Likewise, cross sections are referred to on normal orthogonal coordinate apparatus having XYZ axis, such that Y axis refers to front-to-back, X axis refers to side-to-side, and Z axis refers to up-and-down.

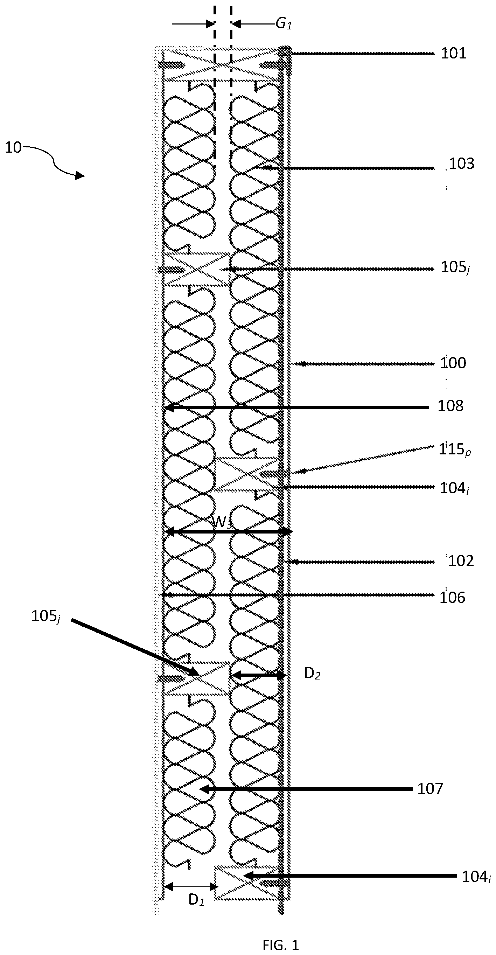

Turning now to FIG.'s 1-3B, illustrating in FIG. 1, a schematic of a X-Y cross section of an embodiment of the construction panel whereby integrated, multifunctional construction panel 10 comprises:
internal wall section 100; internal studs' array 104*ᵢ* operably coupled to internal wall section 100, extending externally (in other words, away from internal wall 100. Also shown is moisture (or vapour) control layer 102 coupled to the internal wall section, with internal thermal insulation layer 103, and external thermal insulation layer 107. Under certain circumstances, internal and external thermal insulation layers (103, 107 respectively) can be combined to a single insulation layer, where gap Gi=0. Also shown is external wall section 108 and external studs' array 105, operably coupled to external wall section 108, extending internally (in other words, away from external wall section 108, towards internal wall section 100), wherein, internal studs' array 104, are staggered with respect to the external studs' array 105.

Moisture control layer 102, or moisture barrier layer, can be comprised, for example, of a resin saturated overlay in a laminate that provides resistance to the passage of air and airborne water vapour. The moisture control layer can be completely or selectively water vapour impermeable and substantially liquid water impermeable, and be comprised of composite sheet material and include an outer non-woven fiber layer, a semi-permeable film, and a reinforcing layer. Other examples of the moisture control layer can be lightweight, non-wet laid polyester nonwoven, a polymer-coated, high tenacity polyester mesh, and a lightweight, non-wet laid, polyester nonwoven material. The moisture control layer 102 can also be abrasion, tear, and mildew resistant and is fire resistant, thus assisting in the fire retardation capabilities of the construction. The term "control layer" as used herein in connection with moisture, refers to the selective nature of the moisture barrier in being water vapor and liquid water impermeable. Being water vapor impermeable refers to the moisture control layer having according to BS EN 12524 a water vapour diffusion- equivalent air layer thickness Sd> 50 m, while having bulk water holdout with hydrostatic head of between about 160 cm and about 200 cm.

Breathable waterproof layer 106, or breather membrane, can be comprised, for example, of a non-woven polypropylene fabric that provides resistance to the passage of liquid water. The breathable layer can have a fixed or variable water vapour permeability, be substantially liquid water impermeable, and be comprised of composite sheet material and include an outer non-woven fiber layer, a semi-permeable film, and a reinforcing layer. The breathable layer can be resistant to ultraviolet light, has fire retardant additives, or is fire resistant glass fibre. The breathable layer 106 can also be abrasion, tear, mildew, ultaviolet and fire resistant, thus assisting in the fire retardation capabilities of the construction. The term "breathable" as used herein in connection with moisture, refers to the selective nature of the moisture barrier in being water vapor permeable while simultaneously being substantially liquid water impermeable. Being water vapor impermeable refers to the moisture control layer having according to BS EN 12524 a water vapour diffusion- equivalent air layer thickness Sd< 0.50 m. while having bulk water holdout with hydrostatic head of between about 160 cm and about 200 cm.

The term "staggered studs" refers in an embodiment to metal studs or studs of other materials, being arranged with the elements (in other words, the studs) in the at least one row, optionally being offset relative to one another in an X and or Y dimension. The offset of the studs can be fixed or variable in each of the X or Y direction.

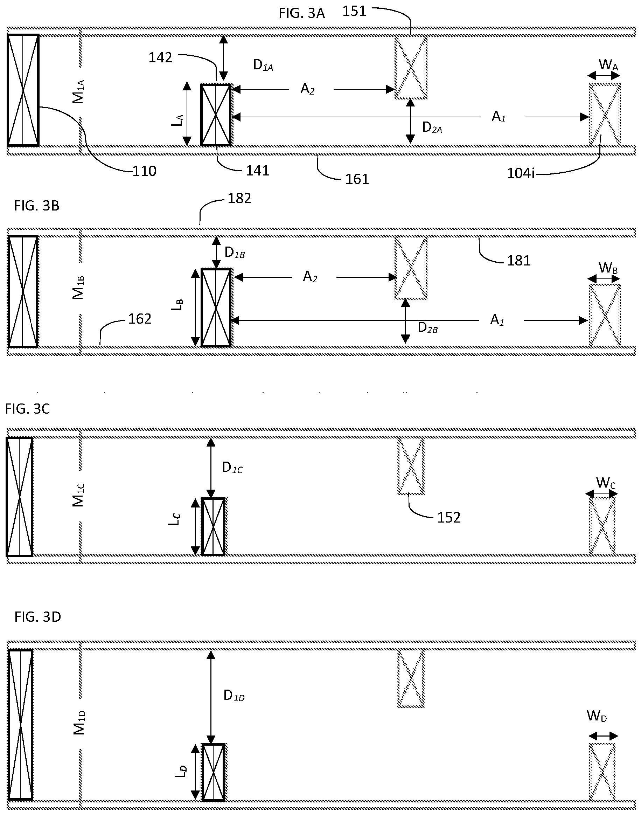

Each of internal wall section 100 and external wall section 108 comprised in the construction panels described herein can consist of a slab having front side and a back side. Turning now to FIG.s 3 A- 3B, showing back side 161 of internal wall section 100 in FIG. 3 A, with front side 162 of internal wall section 100 in FIG. 3B, which also shows the back side 181 and front side 182 of external wall section 108. The term 'slab' is intended to be interpreted broadly. Apart from its usual meaning, referring to a flat layer of construction material laid or cast in situ with or without reinforcement, the term also includes reference to a layer of wall panels or roof panels covered with a concrete or plaster topping.

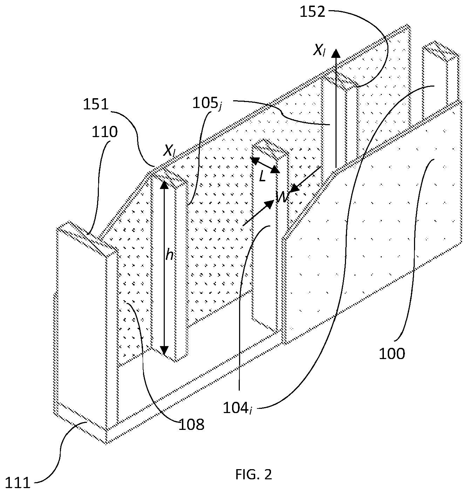

Also illustrated in FIG. 1, is first closing rail 101 (second closing rail 110 is shown in FIG. 2 e.g.), as well as panel thickness metric W3, measuring from front side 182 of external wall 108, to back side 161 of internal wall 100. *D \* illustrates the gap formed between internal studs' array 104, and back side 181 of external wall section 108, while *Di* illustrates the gap formed between external studs' array 105/, and front side 162 of internal wall section 100. Waterproof breathable membrane 106 is also added. Fixing means 1 15*_{P}*, for example selfdrilling cement board screw can be used in an embodiment to couple internal and/or external studs' arrays (104" 105, respectively) to internal and/or external wall sections (100, 108 respectively).

Likewise, (see e.g., FIG. 3A) each i^{th} stud in internal studs' array 104" has proximal end 141 coupled to front side 162 (see e.g., FIG. 3B) of internal wall section 100 and distal end 142 opposite proximal end 141; and wherein each *f^{h}* stud in external studs' array 105*ⱼ* has proximal end 151 coupled to back side 181 of external wall section 108 and distal end 152 (see e.g., FIG. 3C) opposite proximal end 151 of each *j*^{th} stud in external studs' array 105*ⱼ*.

As indicated hereinabove, distal end 142 of each i^{th} stud in internal studs' array 104*ᵢ*, can be configured to define gap *D₁* between distal end 142 and back side 181 of external wall section 108, while distal end 152 of each *j*^{th} stud in external studs' array 105*ⱼ* defines gap *D₂* between distal end 152 and the front side 162 of internal wall section 100. Moreover, *D₁* between distal end 142 and back side 181 of external wall section 108, is no less than about 10 mm, while gap *D₂* between distal end 152 and the front side 162 of internal wall section 100, is likewise no less than about 10 mm.

In an embodiment, the internal and/or external studs' arrays (104*ᵢ*, 105*ⱼ* respectively) can be further configured to have variable periodicity (referring to any periodic characteristic of the studs elements). Furthermore, the term "fixed periodicity" and/or "variable periodicity" is intended to refer to the degree center-to-center spacing by which each of an array of interspersed stud is separated. In an embodiment, periodicity can increase in those sections where structural load is increased, for example next to floor boards, above windows etc. In the event a specific numerical value for a periodicity of distribution is provided herein, a margin of error of ±20 percent may be assumed.

In addition, internal stud's array 104*ᵢ*, used in the multifunctional construction panels provided herein, can be out of phase (in other words, staggered) with external stud's array 105*ⱼ* by a variable distance. In other words, the periodicity of internal stud's array 104*ᵢ*, can vary identically or variable with respect to external stud's array 105*ⱼ*. Again, the variability and the degree of staggering between the studs is a function, in an embodiment, of the functions sought to be imparted on multifunctional construction panel (MCP) 10. For example, the staggering of the internal stud's array 104*ᵢ*, in relation to external stud's array 105*ⱼ* means that the insulation 103, 107 protects internal stud's array 104*ᵢ*, once the fire-side board (in other words, the wall exposed to the fire) has degraded following exposure to fire. In an embodiment protection resulting from internal stud's array 104*ᵢ*, being out of phase, or staggered in relation to external stud's array 105*ⱼ* prolongs the integrity of MCP 10 significantly during fire test and 90 minutes structure and integrity performance and 60 mins insulation performance were achieved, which is not typical for a system comprising only a single board of fire protection.

In an embodiment, by using staggered studs' arrays (104*ᵢ*, 105*ⱼ* respectively), defining gaps *D₁, D₂* insulation 103, 107 (see e.g., FIG.1) can be dispersed continuously throughout the panel interior defined between front side 162 or internal wall section 100, and back side 181 of external wall section 108, thus preventing the formation of cold bridges between external wall section 108 and internal wall section 100, without compromising on structural integrity of MCP 10.

As illustrated in FIG. 2, integrated, multifunctional construction panel 10 can be configured to define a quadrilateral prism having basal facet 111, apical facet (102, not shown), a pair of side walls (e.g., first closing rail 101 and second closing rail 110, see e.g., FIG.s 1 and 2 respectively) disposed on opposing sides of basal 111 and apical 112 facets forming a frame and operably coupled to front side 162 of internal wall section 100 and back side 181 of external wall section 108 (see e.g., FIG.s 3A-3B). As illustrated in FIG. 2, each *i*^{th} and/or *j*^{th} studs in internal and/or external studs' arrays (104*ᵢ*, 105*ⱼ* respectively) can be a beam defining longitudinal axis *X_{L},* with a rectangular X-Y cross-section, transverse to longitudinal axis *X_{L},* defined by the beam. In an embodiment, and to maintain minimal allowable structural integrity, the K-Y cross section is no less than 38 mm (*W,* see e.g., FIG. 2) by 63 mm (*L,* see e.g., FIG. 2), wherein beam forming each *i*^{th} and/or *j*^{th} studs in internal and/or external studs' arrays (104*ᵢ*, 105*ⱼ* respectively) can be configured to span the length of the MCP 10 between basal 111 and apical 112 facets, or alternatively, between the pair of side walls (e.g., first closing rail 101 and second closing rail 110, see e.g., FIG.s 1 and 2 respectively). It stands to reason, that the minimum and maximum cross section dimensions (e.g., 38 mm (*W*, see e.g., FIG. 2) by 63 mm (*L*, see e.g., FIG. 2)), as well as the shape of the cross section are material-specific and here refer to structural timber. Using different materials for forming the stud panel, for example, using metal, composite or polymer studs will allow forming narrower cross section, for example between about 10 mm, to about 63 mm. Likewise, the cross section can be circular, or any polygon having three or more facets. Additionally, or alternatively cross sections could include, for example hollow thin walled sections.

As indicated hereinabove, internal and/or external insulation layers (103, 107 respectively, see e.g., FIG. 1), used in the integrated MCP 10 described and claimed herein, can comprise multiple or single insulating layer (in other words, low thermal conductivity, 'k' of, for example, between about 0.6 W/mK and 0.7 W/mK). The thermal insulation can be, for example; mineral wool fibers, rock wool fibers, slag wool fibers, glass wool fibers, polymer based insulation or a composition of thermal and/or acoustic insulation materials comprising one or more of the foregoing.

Additionally, internal wall section 100 used in the integrated MCP 10 described and claimed herein, can be, for example; particle wood, cement particle, magnesium oxide, calcium silicate, gypsum based board or a composition comprising one or more of the foregoing.

Turning now to FIG.s 3A-3D, wherein FIG. 3A, illustrates a X-Y Cross section plan view of an embodiment of the construction panel, while FIG. 3B illustrating a modification to increase structural performance of the embodiment illustrated in FIG. 3A, while FIG. 3C illustrating a modification adapted to allow for increased thermal (and acoustic) performance and FIG. 3D, illustrating an even greater thermal (and acoustic) performance. As indicated, using staggered studs' arrays (104*ᵢ*, 105*ⱼ* respectively), defining gaps *D₁, D₂* insulation 103, 107 (see e.g., FIG.1), whether in a single or double layers, can be dispersed, poured or layered continuously throughout the panel interior defined between front side 162 or internal wall section 100, and back side 181 of external wall section 108, thus preventing the formation of cold bridges between external wall section 108 and internal wall section 100, without compromising on structural integrity of MCP 10. The interplay between the size and/or periodicity (whether fixed or variable) and/or offset (whether fixed or variable) of the beams forming arrays 104*ᵢ*, 105*ⱼ* respectively, as well as gaps *D₁, D₂* defined between the distal ends 142, 152 of the beams forming arrays 104*ᵢ*, 105*ⱼ* respectively and the choice of insulating material used, it is possible to obtain the required multifunctional performance in terms of structural integrity, thermal and acoustic characteristics, as well as fire resistance performance, without the formation of cold bridges. Integrated MCP 10 can thus be configured such that the distance between the front end of the external wall section and the back end of the internal wall section is between about 89 mm and about 450 mm, for example, between 89 mm and about 198 mm.

For example, as illustrated in FIG. 3A, using mineral wool for thermal and acoustic insulation, and non-combustible mineral board as the internal and external wall sections, and beams forming arrays 104*ᵢ*, 105*ⱼ* respectively having fixed periodicity with each *i*^{th} and/or *j*^{th} studs in internal and/or external studs' arrays (104*ᵢ*, 105*ⱼ* respectively), with W=47 mm, and L = 97 mm as well as gaps *D_{1A}, D_{2A}* defined between the distal ends 142, 152 of the beams forming arrays 104*ᵢ*, 105*ⱼ* respectively being the same and equal 75mm, heat transfer coefficient U of 0.23 W/m2·K was obtained.

In certain embodiments, acoustic insulation can be achieved using a separate absorbing and decoupling material, for example, batts constructed from, glass fibre, and polyester - in addition to the mineral wool. In certain embodiments, the acoustic insulation (in other words, sound adsorbing and decoupling), can comprise a bladder layer of viscoelastic material, such as hydrocolloid gum, for example, gelatin, xanthan, cellulosics and the like.

The same thickness can be modified to increase structural integrity as illustrated in FIG. 3B. As shown in FIG. 3B, using the same materials as in FIG. 3A, and beams forming arrays 104*ᵢ*, 105*ⱼ* respectively having fixed periodicity with each *i*^{th} and/or *j*^{th} studs in internal and/or external studs' arrays (104*ᵢ*, 105*ⱼ* respectively), with W=47 mm, and L = 122 mm as well as gaps *D_{1B}, D_{2B}* defined between the distal ends 142, 152 of the beams forming arrays 104*ᵢ*, 105*ⱼ* respectively being the same and equal 50mm, heat transfer coefficient U of 0.24 W/m2·K was obtained.

Increasing *W3* (See e.g. FIG. 1) can result in increased thermal insulation. As illustrated in FIG. 3C, using the same materials as in FIG. 3A and beams forming arrays 104*ᵢ*, 105*ⱼ* respectively having fixed periodicity with each *i*^{th} and/or *j*^{th} studs in internal and/or external studs' arrays (104*ᵢ*, 105*ⱼ* respectively), with W=38 mm, and L = 89 mm as well as gaps *D_{1C}, D_{2C}* defined between the distal ends 142, 152 of the beams forming arrays 104*ᵢ*, 105*ⱼ* respectively being the same and equal 95 mm, heat transfer coefficient U of 0.206 W/m2·K was obtained.

When necessary, it is possible to increase *W3* even further. As illustrated in FIG. 3D, using the same materials as in FIG. 3A and beams forming arrays 104*ᵢ*, 105*ⱼ* respectively having fixed periodicity with each *i*^{th} and/or *j*^{th} studs in internal and/or external studs' arrays (104*ᵢ*, 105*ⱼ* respectively), with W=38 mm, and L = 89 mm as well as gaps *D_{1D}, D_{2D}* defined between the distal ends 142, 152 of the beams forming arrays 104*ᵢ*, 105*ⱼ* respectively being the same and equal 146 mm, heat transfer coefficient U of 0.15 W/m2·K was obtained.

The term "coupled", including its various forms such as" operably coupling", "coupling" or "couplable", refers to and comprises any direct or indirect, structural coupling, connection or attachment, or adaptation or capability for such a direct or indirect structural or operational coupling, connection or attachment, including integrally formed components and components which are coupled via or through another component or by the forming process. Indirect coupling may involve coupling through an intermediary member or adhesive, or abutting and otherwise resting against, whether frictionally or by separate means without any physical connection

The term "about", when used in the description of the technology and/or claims means that amounts, sizes, formulations, parameters, and other quantities and characteristics are not and need not be exact, but may be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such and may include the end points of any range provided including, for example ±25%, or ±20%, specifically, ± 15%, or ±10%, more specifically, ±5% of the indicated value of the disclosed amounts, sizes, formulations, parameters, and other quantities and characteristics.

The terms "first," "second," and the like, herein do not denote any order, quantity, or importance, but rather are used to denote one element from another. The terms "a", "an" and "the" herein do not denote a limitation of quantity, and are to be construed to cover both the singular and the plural, unless otherwise indicated herein or clearly contradicted by context. The suffix "(s)" as used herein is intended to include both the singular and the plural of the term that it modifies, thereby including one or more of that term (e.g., the aggregate(s) includes one or more aggregates). Reference throughout the specification to "one embodiment", "another embodiment", "an embodiment", and so forth, means that a particular element (e.g., feature, structure, and/or characteristic) described in connection with the embodiment is included in at least one embodiment described herein, and may or may not be present in other embodiments. In addition, it is to be understood that the described elements may be combined in any suitable manner in the various embodiments.

Accordingly and in an embodiment, provided herein is an integrated construction panel comprising: an internal wall section; an internal studs' array operably coupled to the internal wall section, extending externally; a moisture control layer coupled to the internal wall section; an internal thermal insulation layer, an external thermal insulation layer; an external wall section; and an external studs' array operably coupled to the external wall section, extending internally, wherein, the internal studs' array is staggered with respect to the external studs' array, wherein (i) each of the internal wall section and the external wall section consists of a slab having front side and a back side, (ii) each stud in the internal studs' array has a proximal end coupled to the front side of the internal wall section and a distal end opposite the proximal end; and wherein each stud in the external studs' array has a proximal end coupled to the back side of the external wall section and a distal end opposite the proximal end, (iii) the distal end of each of the studs in the internal studs' array defines a gap between the distal end and the back side of the external wall section, wherein (iv) the distal end of each of the studs in the external studs' array defines a gap between the distal end and the front side of the internal wall section, wherein (v) the gap between the distal end of each of the studs in the internal stud's array and the back side of the external wall is no less than about 10 mm., wherein (vi) the gap between the distal end of each of the studs in the external stud's array and the front side of the internal wall is no less than about 10 mm., wherein (vii) the internal and/or external studs' arrays have variable periodicity, wherein (viii) the internal stud's array is out of phase with the external stud's array by a variable distance, wherein (ix) the integrated construction panel defines a quadrilateral prism having a basal facet, an apical facet, a pair of side walls disposed on opposing sides of the basal and apical facets forming a frame and coupled to the front side internal wall section and the back side of the external wall section, (x) wherein each of the studs in the internal and/or external studs' array is a beam defining a longitudinal axis with a rectangular cross-section transverse to the longitudinal axis, (xi) each of the studs in at least one of the internal studs' array and external studs' array is a beam defining a longitudinal axis with a rectangular cross-section transverse to the longitudinal axis, wherein (xii) the cross section is no less than 10 mm by 63 mm, wherein (xiii) the beam spans the length of the panel between basal and the apical facets, wherein (xiv) the internal and/or external insulation layer comprises multiple or single layers, (xv) the insulation is mineral wool fibers, rock wool fibers, slag wool fibers, glass wool fibers, polymer based insulation or a composition comprising one or more of the foregoing, (xvi) the internal wall section is particle wood, cement particle, magnesium oxide, calcium silicate, gypsum based board or a composition comprising one or more of the foregoing, and wherein (xvii) the distance between the front end of the external wall section and the back end of the internal wall section is between about 89 mm and about 450 mm.

While particular embodiments have been described, alternatives, modifications, variations, improvements, and substantial equivalents that are or may be presently unforeseen may arise to applicants or others skilled in the art within the scope of the appended claims.

## Claims

1. An integrated construction panel (10) comprising:
a. an internal wall section (100);
b. an internal studs' array (104) operably coupled to the internal wall section, extending externally;
c. a moisture control layer (102) coupled to the internal wall section (100);
d. an internal thermal insulation layer (103),
e. an external thermal insulation layer (107);
f. an external wall section (108); and
g. an external studs' array (105) operably coupled to the external wall section (108), extending internally,
wherein, the internal studs' array (104) is staggered with respect to the external studs' array (108);
each of the internal wall section (100) and the external wall section (108) consists of a slab having front side and a back side (162, 161; 181, 182),
each stud (104i) in the internal studs' array (104) has a proximal end (141) coupled to the front side (162) of the internal wall section (100) and a distal end (142) opposite the proximal end (141); and wherein each stud (105j) in the external studs' array (105) has a proximal end (151) coupled to the back side (181) of the external wall section (108) and a distal end (152) opposite the proximal end (151),
the distal end (142) of each of the studs (104i) in the internal studs' array (104) defines a gap between the distal end (142) and the back side (181) of the external wall section (108),
the distal end (152) of each of the studs (105j) in the external studs' array (104) defines a gap between the distal end (152) and the front side (162) of the internal wall section, **characterised in that**
the gap (D1) between the distal end (142) of each of the studs (104i) in the internal stud's array (104) and the back side (181) of the external wall (108) is no less than about 10 mm, and
the gap (D2) between the distal end (152) of each of the studs (105j) in the external stud's array (105) and the front side (162) of the internal wall (100) is no less than about 10 mm
**characterised in that** the moisture control layer (102) is fire resistant and the panel further comprises a waterproof breathable membrane (106) external to the external wall section (108), that has fire retardant additives, or is fire resistant glass fibre.

2. The panel of claim 1, wherein the internal and/or external studs' arrays (104, 105) have variable periodicity.

3. The panel of claim 1, wherein the internal stud's array (104) is out of phase with the external stud's array (105) by a variable distance.

4. The panel of claim 1, wherein the integrated construction panel (10) defines a quadrilateral prism having a basal facet (111), an apical facet, a pair of side walls (110) disposed on opposing sides of the basal and apical facets forming a frame and coupled to the front side (162) of the internal wall section (100) and the back side (181) of the external wall section (108).

5. The panel of claim 4, wherein each of the studs in the internal and/or external studs' array (104, 105) is a beam defining a longitudinal axis with a rectangular cross-section transverse to the longitudinal axis.

6. The panel of claim 5, wherein the cross section is no less than 10 mm by 63 mm.

7. The panel of claim 6, wherein the beam spans the length of the panel between basal and the apical facets.

8. The panel of claim 1, wherein the internal and/or external insulation layer (103, 107) comprises multiple or single layers.

9. The panel of claim 8, wherein the insulation is mineral wool fibers, rock wool fibers, slag wool fibers, glass wool fibers, polymer based insulation or a composition comprising one or more of the foregoing.

10. The panel of claim 1, wherein the internal wall section (100) is particle wood, cement particle, magnesium oxide, calcium silicate, gypsum based board or a composition comprising one or more of the foregoing.

11. The panel of claim 10, wherein the distance (M) between the front end (182) of the external wall section (108) and the back end (161) of the internal wall section (100) is between about 89 mm and about 450 mm.

## Patentansprüche

1. Integrierte Bauplatte (10), die Folgendes umfasst:
a. einen inneren Wandabschnitt (100);
b. eine innere Bolzenanordnung (104), die funktionsfähig mit dem inneren Wandabschnitt verbunden ist und sich nach außen erstreckt;
c. eine feuchtigkeitsregulierende Schicht (102), die mit dem inneren Wandabschnitt (100) verbunden ist;
d. eine innere Wärmedämmschicht (103),
e. eine äußere Wärmedämmschicht (107);
f. einen äußeren Wandabschnitt (108); und
g. eine äußere Bolzenanordnung (105), die funktionsfähig mit dem äußeren Wandabschnitt (108) verbunden ist und sich nach innen erstreckt,
wobei die innere Bolzenanordnung (104) in Bezug auf die äußere Bolzenanordnung (108) versetzt ist;
sowohl der innere Wandabschnitt (100) als auch der äußere Wandabschnitt (108) aus einer Platte mit einer Vorderseite und einer Rückseite (162, 161; 181, 182) besteht,
jeder Bolzen (104i) in der inneren Bolzenanordnung (104) ein proximales Ende (141), das mit der Vorderseite (162) des inneren Wandabschnitts (100) verbunden ist, und ein distales Ende (142) gegenüber dem proximalen Ende (141) aufweist; und jeder Bolzen (105j) in der äußeren Bolzenanordnung (105) ein proximales Ende (151), das mit der Rückseite (181) des äußeren Wandabschnitts (108) verbunden ist, und ein distales Ende (152) gegenüber dem proximalen Ende (151) aufweist,
das distale Ende (142) jedes der Bolzen (104i) in der inneren Bolzenanordnung (104) einen Spalt zwischen dem distalen Ende (142) und der Rückseite (181) des äußeren Wandabschnitts (108) definiert,
das distale Ende (152) jedes der Bolzen (105j) in der äußeren Bolzenanordnung (104) einen Spalt zwischen dem distalen Ende (152) und der Vorderseite (162) des inneren Wandabschnitts definiert, **dadurch gekennzeichnet, dass**
der Spalt (D1) zwischen dem distalen Ende (142) jedes der Bolzen (104i) in der inneren Bolzenanordnung (104) und der Rückseite (181) der Außenwand (108) nicht weniger als etwa 10 mm beträgt,und
der Spalt (D2) zwischen dem distalen Ende (152) jedes der Bolzen (105j) in der äußeren Bolzenanordnung (105) und der Vorderseite (162) der Innenwand (100) nicht weniger als etwa 10 mm beträgt,
**dadurch gekennzeichnet, dass** die feuchtigkeitsregulierende Schicht (102) feuerbeständig ist und die Platte außerdem eine wasserdichte, atmungsaktive Membran (106) außerhalb des äußeren Wandabschnitts (108) umfasst, die feuerhemmende Zusätze aufweist oder aus feuerbeständiger Glasfaser besteht.

2. Platte nach Anspruch 1, wobei die inneren und/oder äußeren Bolzenanordnungen (104, 105) eine variable Periodizität aufweisen.

3. Platte nach Anspruch 1, wobei die innere Bolzenanordnung (104) mit der äußeren Bolzenanordnung (105) um einen variablen Abstand phasenverschoben ist.

4. Platte nach Anspruch 1, wobei die integrierte Bauplatte (10) ein vierseitiges Prisma definiert, das Folgendes aufweist: eine Basisfacette (111), eine Scheitelfacette, ein Paar von Seitenwänden (110), die auf gegenüberliegenden Seiten der Basis- und Scheitelfacetten angeordnet sind und einen Rahmen bilden und mit der Vorderseite (162) des inneren Wandabschnitts (100) und der Rückseite (181) des äußeren Wandabschnitts (108) verbunden sind.

5. Platte nach Anspruch 4, wobei jeder der Bolzen in der inneren und/oder äußeren Bolzenanordnung (104, 105) ein Balken ist, der eine Längsachse mit einem rechteckigen Querschnitt quer zur Längsachse definiert.

6. Platte nach Anspruch 5, wobei der Querschnitt nicht weniger als 10 mm mal 63 mm beträgt.

7. Platte nach Anspruch 6, wobei der Balken die Länge der Platte zwischen der Basis- und der Scheitelfacette überspannt.

8. Platte nach Anspruch 1, wobei die innere und/oder äußere Dämmschicht (103, 107) aus mehreren oder einzelnen Schichten besteht.

9. Platte nach Anspruch 8, wobei die Isolierung aus Mineralwollfasern, Steinwollfasern, Schlackenwollfasern, Glaswollfasern, einer Isolierung auf Polymerbasis oder einer Zusammensetzung besteht, die eine oder mehrere der vorgenannten Substanzen umfasst.

10. Platte nach Anspruch 1, wobei der innere Wandabschnitt (100) aus Holzspänen, Zementpartikeln, Magnesiumoxid, Kalziumsilikat, einer Platte auf Gipsbasis oder einer Zusammensetzung besteht, die einen oder mehrere der vorgenannten Stoffe enthält.

11. Platte nach Anspruch 10, wobei der Abstand (M) zwischen dem vorderen Ende (182) des äußeren Wandabschnitts (108) und dem hinteren Ende (161) des inneren Wandabschnitts (100) zwischen etwa 89 mm und etwa 450 mm beträgt.

## Revendications

1. Panneau de construction intégré (10) comprenant :
a. une section de paroi interne (100) ;
b. un réseau de montants internes (104) couplé de manière opérationnelle à la section de paroi interne, s'étendant vers l'extérieur ;
c. une couche de contrôle de l'humidité (102) couplée à la section de paroi interne (100) ;
d. une couche d'isolation thermique interne (103),
e. une couche d'isolation thermique externe (107) ;
f. une section de paroi externe (108) ; et
g. un réseau de montants externes (105) couplé de manière fonctionnelle à la section de paroi externe (108), s'étendant vers l'intérieur,
dans lequel le réseau de montants internes (104) est décalé par rapport au réseau de montants externes (108) ;
chacune de la section de paroi interne (100) et de la section de paroi externe (108) est constituée par une dalle ayant un côté avant et un côté arrière (162, 161 ; 181, 182),
chaque montant (104i) dans le réseau de montants internes (104) a une extrémité proximale (141) couplée au côté avant (162) de la section de paroi interne (100) et une extrémité distale (142) opposée à l'extrémité proximale (141) ; et dans lequel chaque montant (105j) dans le réseau de montants externes (105) a une extrémité proximale (151) couplée au côté arrière (181) de la section de paroi externe (108) et une extrémité distale (152) opposée à l'extrémité proximale (151),
l'extrémité distale (142) de chacun des montants (104i) dans le réseau de montants internes (104) définit un espace entre l'extrémité distale (142) et le côté arrière (181) de la section de paroi externe (108),
l'extrémité distale (152) de chacun des montants (105j) dans le réseau de montants externes (104) définit un espace entre l'extrémité distale (152) et le côté avant (162) de la section de paroi interne, **caractérisé en ce que**
l'espace (D1) entre l'extrémité distale (142) de chacun des montants (104i) dans le réseau de montants internes (104) et le côté arrière (181) de la paroi externe (108) n'est pas inférieur à environ 10 mm, et
l'espace (D2) entre l'extrémité distale (152) de chacun des montants (105j) dans le réseau de montants externes (105) et le côté avant (162) de la paroi interne (100) n'est pas inférieur à environ 10 mm
**caractérisé en ce que** la couche de contrôle de l'humidité (102) est résistante au feu et le panneau comprend en outre une membrane imperméable et respirante (106) externe à la section de paroi externe (108), qui contient des additifs ignifuges ou qui est en fibre de verre résistante au feu.

2. Panneau selon la revendication 1, dans lequel les réseaux de montants internes et/ou externes (104, 105) ont une périodicité variable.

3. Panneau selon la revendication 1, dans lequel le réseau de montants internes (104) est déphasé avec le réseau de montants externes (105) d'une distance variable.

4. Panneau selon la revendication 1, dans lequel le panneau de construction intégré (10) définit un prisme quadrilatéral ayant une facette basale (111), une facette apicale, une paire de parois latérales (110) disposées sur des côtés opposés des facettes basale et apicale formant un cadre et couplées au côté avant (162) de la section de paroi interne (100) et au côté arrière (181) de la section de paroi externe (108).

5. Panneau selon la revendication 4, dans lequel chacun des montants du réseau de montants interne et/ou externe (104, 105) est une poutre définissant un axe longitudinal de section rectangulaire transversale à l'axe longitudinal.

6. Panneau selon la revendication 5, dans lequel la section transversale n'est pas inférieure à 10 mm sur 63 mm.

7. Panneau selon la revendication 6, dans lequel la poutre s'étend sur la longueur du panneau entre les facettes basale et apicale.

8. Panneau selon la revendication 1, dans lequel la couche d'isolation interne et/ou externe (103, 107) comprend des couches multiples ou simples.

9. Panneau selon la revendication 8, dans lequel l'isolant est des fibres de laine minérale, des fibres de laine de roche, des fibres de laine de laitier, des fibres de laine de verre, un isolant à base de polymère ou une composition comprenant un ou plusieurs des éléments précédents.

10. Panneau selon la revendication 1, dans lequel la section de paroi interne (100) est constituée de particules de bois, de particules de ciment, d'oxyde de magnésium, de silicate de calcium, de plaque à base de gypse ou d'une composition comprenant un ou plusieurs des éléments précédents.

11. Panneau selon la revendication 10, dans lequel la distance (M) entre l'extrémité avant (182) de la section de paroi externe (108) et l'extrémité arrière (161) de la section de paroi interne (100) est comprise entre environ 89 mm et environ 450 mm.
